# EUROPÄISCHE PATENTANMELDUNG

(11) **EP 1 958 803 A2**
(43) Veröffentlichungstag der Anmeldung: **20.08.2008**
(21) Anmeldenummer: 08000555.6
(22) Anmeldetag: 14.01.2008
(51) Int. Cl.: B60G 15/07

(54) **Radaufhängung**

(30) Priorität: 15.02.2007 DE 102007008059; 12.08.2007 DE 102007038070
(71) Anmelder: Muhr und Bender KG, 57427 Attendorn (DE)
(72) Erfinder: Brand, Robert, Dipl.-Phys. Dr., 57439 Attendorn (DE); Neubrandt, Jörg, Dipl.-Ing. Dr.-Ing., 57258 Freudenberg-Alchen (DE); Kriese, Hans-Ulrich, Dipl.-Ing., 99631 Weißensee (DE)
(74) Vertreter: Gesthuysen, von Rohr & Eggert

(57) **Zusammenfassung**

Beschrieben und dargestellt ist eine Radaufhängung Radaufhängung mit einem einerseits mit der Karosserie (1) und andererseits mit dem Rad (2) verbundenen, eine Schraubendruckfeder (3) = (Tragfeder) und einen Stoßdämpfer (4) aufweisenden, radführenden Federbein (5) und mit einem Querlenker (6), wobei die Schraubendruckfeder (3) zwischen einem oberen, mit der Karosserie (1) verbundenen Federwiderlager (12) und einem unteren, mit dem Stoßdämpfer (4) verbundenen Federauflager (13) vorgesehen ist.

Erfindungsgemäß wirken sich die ungewollten, aber unvermeidbaren Relativbewegungen zwischen dem unteren Federende der Schraubendruckfeder (3) und dem unteren, mit dem Stoßdämpfer (4) verbundenen Federauflager (13) sich weniger negativ aus als im Stand der Technik, und zwar dadurch, daß zwischen dem unteren Federende der Schraubendruckfeder (3) und dem unteren, mit dem Stoßdämpfer (4) verbundenen Federauflager (13) zumindest teilweise eine das untere Federende der Schraubendruckfeder oder / und das untere, mit dem Stoßdämpfer (4) verbundene Federauflager (13) schützende Beschichtung (14) vorgesehen ist.

## Beschreibung

Die Erfindung betrifft eine Radaufhängung mit einem einerseits mit der Karosserie und andererseits mit dem Rad verbundenen, eine Schraubendruckfeder (= Tragfeder) und einen Stoßdämpfer aufweisenden, radführenden Federbein und mit einem Querlenker, wobei die Schraubendruckfeder zwischen einem oberen, mit der Karosserie verbundenen Federwiderlager und einem unteren, mit dem Stoßdämpfer verbundenen Federauflager vorgesehen ist. Die Bauteile, die zuvor mit Federwiderlager und Federauflager bezeichnet worden sind, werden häufig auch als Federteller bezeichnet.

Bei Radaufhängungen der hier grundsätzlich in Rede stehenden Art, häufig auch McPherson-Radaufhängungen genannt, ist der bei anderen üblichen Radaufhängungen vorhandene obere Querlenker durch ein langhubiges Federbein ersetzt (LUEGER "LEXIKON DER TECHNIK", Band 12 "LEXIKON DER FAHRZEUGTECHNIK", 1967 Deutsche Verlags-Anstalt GmbH, Seite 425).

Bei den Radaufhängungen, um die es vorliegend geht, treten in der Regel Querkräfte auf, die von der Kolbenstange des Stoßdämpfers aufgenommen werden müssen. Das hat erhebliche Reibungskräfte am Kolben des Stoßdämpfers und infolge dessen eine ruckelnde Ein- und Ausfederung zur Folge.

Mit dem zuvor angesprochenen Problem der bei Radaufhängungen der in Rede stehenden Art auftretenden Querkräfte hat sich die Fachwelt bereits seit Jahrzehnten und umfangreich befaßt. Dazu wird verwiesen auf die deutsche Offenlegungsschrift 1 505 616, die deutsche Patentschrift 37 43 450 und die inhaltsgleiche europäische Patentschrift 0 319 651, die PCT-Offenlegungsschrift WO O1/56.819 und die deutsche Patentschrift 101 25 503, insbesondere aber auf die sehr ausführliche Darstellung des Problems und unterschiedlicher Lösungen dieses Problems in der nicht veröffentlichten deutschen Patentanmeldung 10 2006 060 149.1, die als Offenlegungsschrift 10 2006 060 149 vorliegen wird, wenn diese Patentanmeldung veröffentlicht wird. Der Offenbarungsgehalt der zuvor aufgeführten vorveröffentlichten Druckschriften, und der Offenbarungsgehalt der deutschen Patentanmeldung 10 2006 060 149.1 wird hiermit ausdrücklich auch zum Offenbarungsgehalt dieser Patentanmeldung gemacht.

Der Lehre der deutschen Patentanmeldung 10 2006 060 149.1 liegt die Aufgabe zugrunde, die aus der deutschen Patentschrift 37 43 450 bekannte Radaufhängung bzw. die aus der deutschen Patentschrift 101 25 503 bekannte Radaufhängung unter dem Gesichtspunkt der Gewichtreduzierung zu verbessern. Die hier vorliegende Patentanmeldung befaßt sich mit einem anderen Problem.

Bei Radaufhängungen der in Rede stehenden Art liegt ein aus der Schraubendruckfeder einerseits sowie aus dem oberen, mit der Karosserie verbundenen Federwiderlager und dem unteren, mit dem Stoßdämpfer verbundenen Federauflager andererseits bestehendes System vor. In diesem System kommt es zu einerseits gewollten Relativbewegungen, nämlich zwischen dem unteren Federauflager und dem oberen Federwiderlager, andererseits ungewollten, aber nicht vermeidbaren Relativbewegungen zwischen den Federenden der Schraubendruckfeder einerseits und dem oberen Federwiderlager bzw. dem unteren Federauflager andererseits, insbesondere zwischen dem unteren Federende der Schraubendruckfeder und dem unteren Federauflager. Diese Relativbewegungen sind unvermeidbar, weil einerseits schon die ein- und ausfedernde Schraubendruckfeder ein durchaus kompliziertes Gebilde ist, weil andererseits vor allem aber das System aus der Schraubendruckfeder einerseits sowie aus dem oberen Federwiderlager und dem unteren Federauflager andererseits beim Ein- und Ausfedern geometrisch bzw. räumlich kompliziert ist.

Zum Verständnis dessen, was weiter unten ausgeführt wird, sind zunächst einige Festlegungen erforderlich:

Die Fahrzeuglängsrichtung sei mit X-Richtung, die senkrecht zur Fahrzeuglängsrichtung verlaufende Richtung sei mit Y-Richtung bezeichnet; die senkrecht zur X-Richtung und senkrecht zur Y-Richtung verlaufende Richtung sei mit Z-Richtung bezeichnet. Daraus folgt, daß die senkrecht zur Fahrzeuglängsrichtung verlaufenden Ebenen mit XZ-Ebenen, die in Fahrzeuglängsrichtung verlaufenden Ebenen mit YZ-Ebenen bezeichnet werden.

Legt man das zuvor festgelegte X-Y-Koordinatensystem so, daß für den Mittelpunkt eines Kreises X = 0 und Y = + gilt, so sei vereinbart, daß von diesem Mittelpunkt ausgehend -X = max. für den Winkel 0°, X = 0 und Y = max. für den Winkel 90°, X = max. für den Winkel 180° sowie X = 0 und Y = min. für den Winkel 270° gilt.

Die zu der in Rede stehende Radaufhängung gehörende Schraubendruckfeder hat eine Federmittellinie (siehe dazu auch die Ausführungen in der deutschen Patentanmeldung 10 2006 060 149.1) und eine Federkraftwirkungslinie. Aus den im Stand der Technik dargelegten Gründen (vgl. die deutsche Offenlegungsschrift 1 505 616, die deutsche Patentschrift 37 43 450, die PCT-Offenlegungsschrift WO 01/56.819 und die deutsche Patentschrift 101 35 503 sowie die deutsche Patentanmeldung 10 2006 060 149.1), fällt die Federkrafwirkungslinie nicht mit der Federmittellinie zusammen. Daraus kann resultieren bzw. resultiert ein Auseinanderfallen von den Endpunkten der Federmittellinie einerseits und der Federkraftwirkungslinie andererseits. Das ist bei dem oberen, mit der Karosserie verbundenen Federwiderlager in der Regel nicht gewollt, vielmehr ein Ergebnis unvermeidbarer Toleranzen, bei dem unteren, mit dem Stoßdämpfer verbundenen Federauflager jedoch gewollt, um nämlich ansonsten auftretende Querkräfte zu eliminieren bzw. auftretende Querkräfte zu reduzieren. Dieses Auseinanderfallen der Enden der Federmittellinie einerseits und der Federkraftwirkungslinie andererseits wird auch mit Offset bezeichnet, soll auch im folgenden mit Offset bezeichnet werden.

Die Größe der Relativbewegungen zwischen den Federenden der Schraubendruckfeder einerseits und dem oberen, mit der Karosserie verbundenen Federwiderlager bzw. dem unteren, mit dem Stoßdämpfer verbundenen Federauflager andererseits ist abhängig von der Größe des zuvor erläuternden Offsets. Da, wie ausgeführt, der obere Offset relativ klein ist, der untere Offset jedoch relativ groß ist, treten die mit der erläuterten ungewollten, aber unvermeidbaren Relativbewegung verbundenen Nachteile vor allem am unteren Federende der Schraubendruckfeder bzw. am unteren, mit dem Stoßdämpfer verbundenen Federauflager auf. Nachfolgend wird in dem in Rede stehenden System nur das untere Federende der Schraubendruckfeder und das untere, mit dem Stoßdämpfer verbundene Federauflager betrachtet, wenn das, was im folgenden dazu ausgeführt wird, auch, wenn auch in geringerem Maße, für das obere Federende der Schraubendruckfeder und das obere, mit der Karosserie verbundene Federwiderlager gilt.

Die bei den hier in Rede stehenden Radaufhängungen eingesetzten, aus Federstahl bestehenden Schraubendruckfedern sind in der Regel vollständig beschichtet, z. B. mit einem Schutzlack versehen, um die metallische Oberfläche zu schützen, insbesondere gegen mechanische Beschädigungen, z. B. durch Steinschlag, und gegen chemische Beschädigungen, nämlich gegen Korrosion, die im Laufe der Zeit ansonsten auftreten könnte, insbesondere durch Feuchtigkeit, z. B. durch salzhaltiges Wasser. Gleichwohl treten dort, wo es zu den erläuterten ungewollten, aber nicht vermeidbaren Relativbewegungen zwischen dem unteren Federende der Schraubendruckfeder und dem unteren, mit dem Stoßdämpfer verbundenen Federauflager kommt, Beschädigungen der Beschichtung der Schraubendruckfeder auf, beispielsweise durch in diesen Bereich eindringende, scheuernde Partikel und durch eine auftretende Korrosion, insbesondere durch eine Korrosion, die wiederum das Ergebnis der scheuernden Partikel ist. Letzten Endes kommt es im Bereich der unteren Federenden der Schraubendruckfeder immer wieder zu Federbrüchen, so daß die Schraubendruckfedern zur Vermeidung solcher Federbrüche überdimensioniert werden müssen bzw. das eingesetzte Material nicht optimal ausgenutzt werden kann.

Nach allem liegt der Erfindung die Aufgabe zugrunde, die bekannten Radaufhängungen dahingehend zu verbessern, daß die ungewollten, aber unvermeidbaren Relativbewegungen zwischen dem unteren Federende der Schraubendruckfeder und dem unteren, mit dem Stoßdämpfer verbundenen Federauflager sich weniger negativ als im Stand der Technik auswirken und/oder daß es zu geringeren Relativbewegungen der in Rede stehenden Art kommt.

Die erfindungsgemäße Radaufhängung, bei der die zuvor hergeleitete und aufgezeigte Aufgabe gelöst ist, ist zunächst und im wesentlichen dadurch gekennzeichnet, daß zwischen dem unteren Federende der Schraubendruckfeder und dem unteren, mit dem Stoßdämpfer verbundenen Federauflager zumindest teilweise eine das untere Federende der Schraubendruckfeder oder/und das untere, mit dem Stoßdämpfer verbundene Federauflager schützende Beschichtung vorgesehen ist, also eine zusätzlich zu der ohnehin vorhandenen Beschichtung der Schraubendruckfeder verwirklichte Beschichtung. '

Die erfindungsgemäß vorgesehene besondere bzw. zusätzliche Beschichtung kann am unteren Federende der Schraubendruckfeder, an dem unteren, mit dem Stoßdämpfer verbundenen Federauflager oder sowohl an dem unteren Federende der Schraubendruckfeder als auch an dem unteren, mit dem Stoßdämpfer verbundenen Federauflager verwirklicht sein; vorzugsweise ist diese Beschichtung jedoch nur an dem unteren, mit dem Stoßdämpfer verbundenen Federauflager verwirklicht.

Wie nun im einzelnen die in Rede stehende Beschichtung aufgebracht wird, also der entsprechende Bereich beschichtet wird, ist dem Fachmann zunächst freigestellt. Er wird dabei sein fachmännisches Wissen und Können einsetzen, was z. B. in "Wikepedia, die freie Enzyklopädie" zum Stichwort bzw. Suchwort "Beschichten" dokumentiert ist. Dieses fachmännische Wissen und Können, dokumentiert, wie zuvor angegeben, wird hiermit ausdrücklich zum Offenbarungsgehalt dieser Patentanmeldung gemacht.

Bei der erfindungsgemäßen Radaufhängung besteht die in Rede stehende Beschichtung vorzugsweise aus Gummi oder aus Kunststoff. Besteht die Beschichtung aus Gummi, so kann die Erfindung dadurch realisiert sein, daß die Beschichtung auf mit dem unteren Federende der Schraubendruckfeder in Berührung kommende Bereiche des unteren, mit dem Stoßdämpfer verbundenen Federauflagers aufvulkanisiert ist. Wird dagegen eine Beschichtung aus Kunststoff realisiert, so kann, je nach der Art des aufzubringenden Kunststoffs, ganz unterschiedlich gearbeitet werden, insbesondere kann das Material durch chemische Gasphasenabscheidung (CVD), durch physikalische Gasphasenabscheidung (PVD) oder durch Plasmaspritzen aufgebracht werden. Darüber hinaus kann auch hier der Fachmann auf sein fachmännisches Wissen und Können zurückgreifen, wie es in "Wikepedia, die freie Enzyklopädie" unter dem Stichwort bzw. Suchwort "Beschichten" sowie unter den Stichwörtern bzw. Suchwörtern "Chemische Gasphasenabscheidung", "Physikalische Gasphasenabscheidung" und "Plasmaspritzen" dokumentiert ist.

Nach einer weiteren Lehre der Erfindung, die losgelöst von den zuvor im einzelnen beschriebenen Maßnahmen, aber auch in Verbindung damit realisiert werden kann, ist vorgesehen, daß die Beschichtung aus Zink besteht oder eine Zinkbeilage enthält. Dabei wirkt die Beschichtung aus Zink oder die in der Beschichtung enthaltene Zinkbeilage als Opferanode, wie das für sich im Stand der Technik zur Verhinderung von Korrosionen bekannt ist. Auch bezüglich der Aufbringung einer Beschichtung aus Zink oder einer eine Zinkbeilage enthaltenden Beschichtung wird wieder auf das in "Wikepedia, die freie Enzyklopädie" dokumentierte fachmännische Wissen und Können verwiesen.

Wie weiter oben ausgeführt, liegt der Erfindung die Aufgabe zugrunde, die bekannten Radaufhängungen dahingehend zu verbessern, daß die ungewollten, aber unvermeidbaren Relativbewegungen zwischen dem unteren Federende der Schraubendruckfeder und dem unteren, mit dem Stoßdämpfer verbundenen Federauflager sich weniger negativ als im Stand der Technik auswirken und/oder es zu geringeren Relativbewegungen der in Rede stehenden Art kommt. Der erste Teil dieser Aufgabe ist mit dem, was zuvor ausgeführt worden ist, mit anderen Worten dadurch gelöst, daß eine bestimmte ungewollte, aber unvermeidbare Relativbewegung zwischen dem unteren Federende der Schraubendruckfeder und dem unteren, mit dem Stoßdämpfer verbundenen Federauflager hingenommen wird und die schädlichen Auswirkungen genau dieser Relativbewegung reduziert bzw. sogar völlig eliminiert werden.

Die der Erfindung insgesamt zugrundeliegende Aufgabe, konkret der zweite Teil dieser Aufgabe, kann aber auch losgelöst von dem, was zuvor ausgeführt worden ist, vor allem aber auch zusätzlich dadurch gelöst sein, daß die ungewollten, aber unvermeidbaren Relativbewegungen zwischen dem unteren Federende der Schraubendruckfeder und dem unteren, mit dem Stoßdämpfer verbundenen Federauflager in ihrer Größe reduziert werden, was durch unterschiedliche Maßnahmen realisiert werden kann, die jeweils für sich, vor allem aber kumulativ angewendet werden.

Weiter oben ist erläutert worden, daß für die bekannten Radaufhängungen, von denen die Erfindung ausgeht, gilt, daß die Federkraftwirkungslinie nicht mit der Federmittellinie zusammenfällt, woraus ein Auseinanderfallen von den Endpunkten der Federmittellinie einerseits und der Federkraftwirkungslinie andererseits resultiert, was bei dem unteren, mit dem Stoßdämpfer verbundenen Federauflager gewollt ist, um nämlich ansonsten auftretende Querkräfte zu eliminieren bzw. auftretende Querkräfte zu reduzieren. Dieses Auseinanderfallen der Enden der Federmittellinie einerseits und der Federkradftwirkungslinie andererseits ist mit Offset bezeichnet worden, soll nachfolgend mit Federtelleroffset bezeichnet werden.

Nach einer weiteren Lehre der Erfindung, der auch für sich, insbesondere aber in Verbindung mit dem, was bereits erläutert worden ist, Bedeutung zukommt, ist im Bereich des unteren, mit dem Stoßdämpfer verbundenen Federauflagers der zur Querkraftkompensation gewollte Federtelleroffset teilweise durch die Geometrie des Federfauflagers und teilweise durch die Geometrie der Schraubendruckfeder realisiert. Im einzelnen kann der Federtelleroffset zu etwa 35 % bis 50 %, insbesondere zu etwa 40 % bis 45 %, durch die Geometrie des Federauflagers und zu etwa 50 % bis 65 %, insbesondere zu etwa 55 % bis 60 %, durch die Geometrie der Schraubendruckfeder realisiert sein.

Nach einer weiteren Lehre der Erfindung, die wiederum auch für sich von Bedeutung, insbesondere aber in Verbindung mit zuvor beschriebenen Maßnahmen von Bedeutung sein kann, eine weitere Lehre der Erfindung, die dadurch gekennzeichnet ist, daß das untere mit dem Stoßdämpfer verbundene Federauflager nicht exakt senkrecht zur Kolbenstange des Stoßdämpfers ange--ordnet ist, also eine Federtellerneigung realisiert ist, also die Ebene des unteren, mit dem Stoßdämpfer verbundenen Federauflagers unter einem spitzen Winkel zur Kolbenstange des Stoßdämpfers verläuft, vorzugsweise unter einem Winkel von etwa 84° bis 88°, insbesondere unter einem Winkel von etwa 86°.

Weiter oben sind verschiedene Festlegungen getroffen worden, unter anderem auch für ein X-Y-Koordinatensystem. Unter Berücksichtigung dieser Festlegungen geht eine weitere Lehre der Erfindung dahin, der auch für sich, also losgelöst von den Maßnahmen, die bisher beschrieben worden sind, erhebliche Bedeutung kommt, die Schraubendruckfeder unter einem Winkel auf das untere, mit dem Stoßdämpfer verbundene Federauflager auszurichten, der gleich oder größer 90°, aber kleiner 180° ist. Im Stand der Technik hat man die Schraubendruckfeder unter einen Winkel auf das untere, mit dem Stoßdämpfer verbundene Federauflager ausgerichtet, der größer 270°, kleiner 360° ist (vgl. die DE 42 03 658 C2), bzw. der 180° ist (vgl. die DE 102 58 936 A1). Demgegenüber ist erfindungsgemäß erkannt worden, daß die ungewollten Relativbewegungen zwischen dem unteren Federende der Schraubendruckfeder und dem unteren, mit dem Stoßdämpfer verbundenen Federauflager stark reduziert werden können, wenn die Schraubendruckfeder unter einem Winkel auf das untere, mit dem Stoßdämpfer verbundene Federauflager ausgerichtet ist, der gleich oder größer 90°, aber kleiner 180° ist.

Im einzelnen gibt es eine Mehrzahl von Möglichkeiten, die erfindungsgemäße Radaufhängung auszugestalten und weiterzubilden. In Verbindung mit der Zeichnung wird ein bevorzugtes Ausführungsbeispiel der erfindungsgemäßen Radaufhängung beschrieben. In der Zeichnung zeigen
- Fig. 1: eine grafische Darstellung zur Erläuterung einer Radaufhängung der in Rede stehenden Art und der dabei auftretenden Kräfte,
- Fig. 2: eine grafische Darstellung einer besonderen Radaufhängung, bei der Querkräfte nicht mehr auftreten,
- Fig. 3: eine Draufsicht auf ein bevorzugtes Ausführungsbeispiel eines unteren, mit dem Stoßdämpfer verbundenen Federauflagers einer erfindungsgemäßen Radaufhängung,
- Fig. 4: eine perspektivische Darstellung, die das untere Federende einer Schraubendruckfeder und ein unteres Federauflager zeigt, nicht in eine Radaufhängung eingebaut, vielmehr zu Meß- und Versuchszwecken aufgebaut,
- Fig. 5: eine schematische Darstellung zur Erläuterung von Federtelleroffset und Federtellerneigung und
- Fig. 6: Darstellung zur Unterdrückung der Relativbewegung zwischen dem unteren Federende der Schraubendruckfeder und dem unteren, mit dem Stoßdämpfer verbundenen Federauflager.

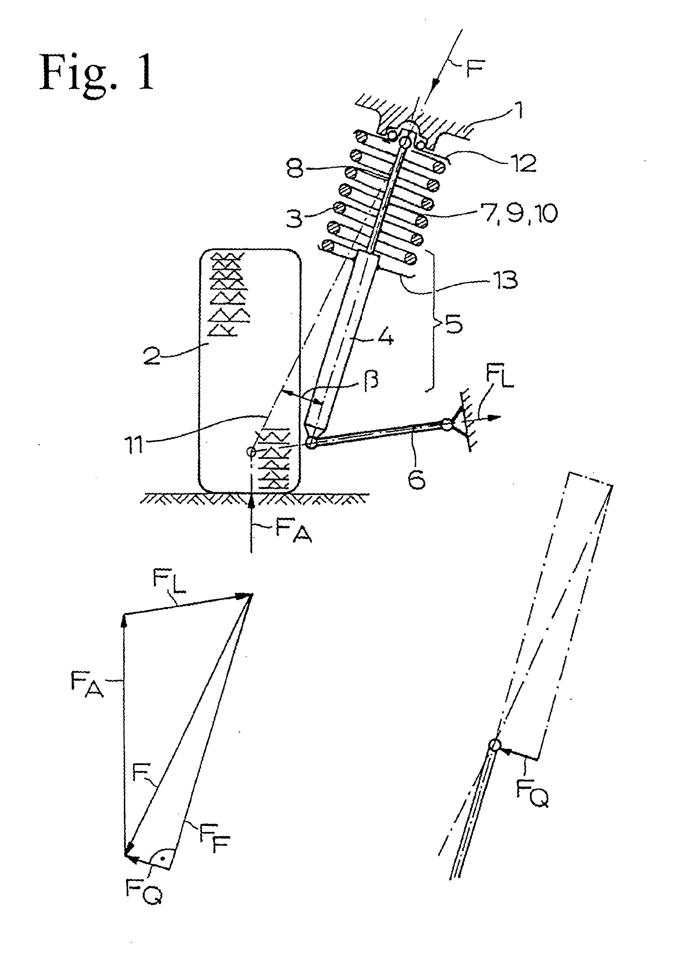

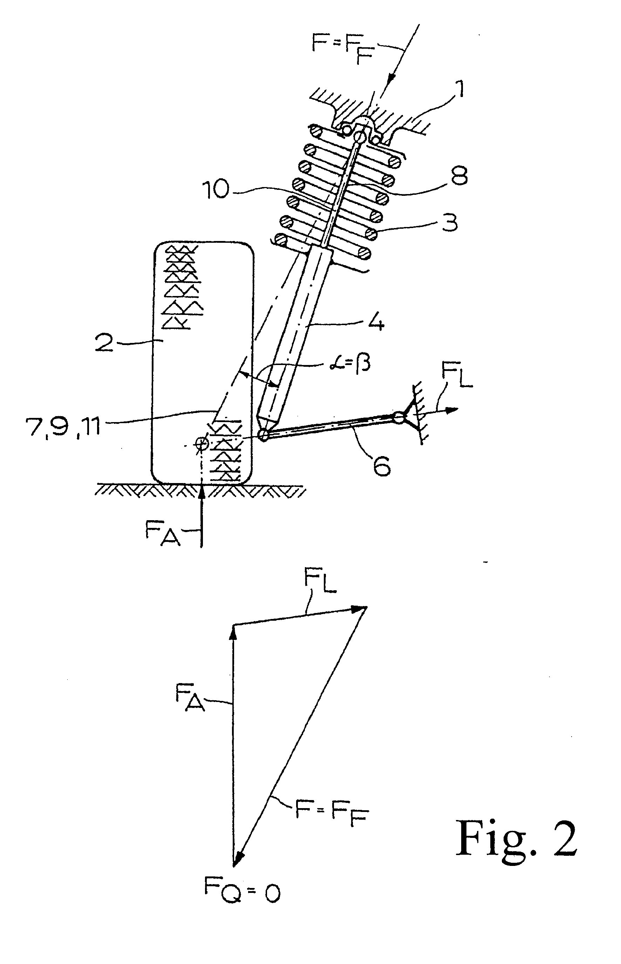

Zu der Radaufhängung, die in den Fig. 1 und 2 dargestellt ist, gehört ein mit der Karosserie 1 und mit dem Rad 2 verbundenes, eine Schraubendruckfeder 3 (= Tragfeder bzw. Achsfeder) und einen Stoßdämpfer 4 aufweisendes, radführendes Federbein 5 sowie ein Querlenker 6. Eingezeichnet ist auch die Federmittellinie 7 der Schraubendruckfeder 3. Dazu, daß bei Schraubendruckfedern Federmittellinien nicht körperlich vorhanden sind, und wie bei Schraubendruckfedern Federmittellinien ermittelt werden können, wird auf die entsprechenden Ausführungen in der noch nicht veröffentlichten Patentanmeldung 10 2006 060 149.1 verwiesen.

Wie der Fig. 1 zu entnehmen ist, stellt sich zwischen verschiedenen Kräften ein Kräftegleichgewicht ein, nämlich zwischen der Radaufstandskraft F_{A}, der Lenkerkraft F_{L}, der Karosserieabstützkraft F, der Federkraft F_{F} und der Querkraft F_{Q}. Die unerwünschte, von der Kolbenstange 8 des Stoßdämpfers 4 aufzunehmende und zu Reibungskräften am Kolben des Stoßdämpfers 4 führende Querkraft F_{Q} resultiert daraus, daß der Winkel α zwischen der Federkraftwirkungslinie 9 der Schraubendruckfeder 3 und der Stoßdämpferachse 10 einerseits und der Winkel β zwischen der Abstützwirkungslinie 11 und der Stoßdämpferachse 10 andererseits nicht gleich sind, die Federkraftwirkungslinie 9 und die Abstützwirkungslinie 11 also nicht zusammenfallen.

Bei der in Fig. 2 dargestellten Radaufhängung, die wie die in Fig. 1 dargestellte Radaufhängung zum Stand der Technik gehört, sind der Winkel α zwischen der Federkraftwirkungslinie 9 und der Schraubendruckfeder 3 und der Stoßdämpferachse 10 einerseits und der Winkel β zwischen der Abstützwirkungslinie 11 und der Stoßdämpferachse 10 andererseits gleich groß; also fallen die Federkraftwirkungslinie 9 und die Abstützwirkungslinie 11 zusammen. Daraus resultiert, daß die Schraubendruckfederkraft F_{F} und die Karosserieabstützkraft F gleich sind, die Querkraft F_{Q} also Null ist.

Bei den bekannten Radaufhängungen ist die Schraubendruckfeder 3 vorzugsweise so gestaltet, daß durch die Schraubendruckfeder 3 Querkräfte zumindest teilweise kompensiert werden, die ohne die querkraftkompensierende Wirkug der Schraubendruckfeder 3 am Stoßdämpfer 4 aufträten. Auch bei der erfindungsgemäßen Radaufhängung ist die Schraubendruckfeder 3 vorzugsweise in der beschriebenen Weise gestaltet. Bei der erfindungsgemäßen Radaufhängung können auch die Maßnahmen verwirklicht sein, die in der deutschen Patentschrift 101 25 503 zur Kompensation des dort erläuterten destabilisierenden Lenkmoments beschrieben sind; diese Maßnahmen können auch verwirklicht sein, sie müssen aber nicht verwirklicht sein. Bei der erfindungsgemäßen Radaufhängung können des weiteren auch die Maßnahmen verwirklicht sein, die in der noch nicht veröffentlichten Patentanmeldung 10 2006 060 149.1 erläutert sind. Auch hier gilt, daß diese Maßnahmen verwirklicht sein können, aber nicht verwirklicht sein müssen.

Im übrigen ist noch nachzutragen, daß bei den in den Fig. 1 und 2 dargestellten Radaufhängungen die Schraubendruckfeder 3 zwischen einem oberen, mit der Karosserie 1 verbundenen Federwiderlager 12 und einem unteren, mit dem Stoßdämpfer 4 verbundenen Federauflager 13 vorgesehen ist.

Weiter oben ist im einzelnen erläutert worden, daß es bei den in Rede stehenden, zum Stand der Technik gehörenden Radaufhängungen zu ungewollten, aber nicht vermeidbaren Relativbewegungen zwischen den Federenden der Schraubendruckfeder 3 einerseits und dem oberen Federwiderlager 12 bzw. dem unteren Federauflager 13 andererseits kommt, insbesondere zu Relativbewegungen zwischen dem unteren Federende der Schraubendruckfeder 3, und dem unteren Federauflager 13. Erläutert ist weiter oben auch, welche negativen Auswirkungen diese Relativbewegungen haben und daß es die Aufgabe der Erfindung ist, die bekannten Radaufhängungen dahingehend zu verbessern, daß die ungewollten, aber unvermeidbaren Relativbewegungen zwischen dem unteren Federende der Schraubendruckfeder 3 und dem unteren, mit dem Stoßdämpfer 4 verbundenen Federauflager 13 sich weniger negativ als im Stand der Technik auswirken.

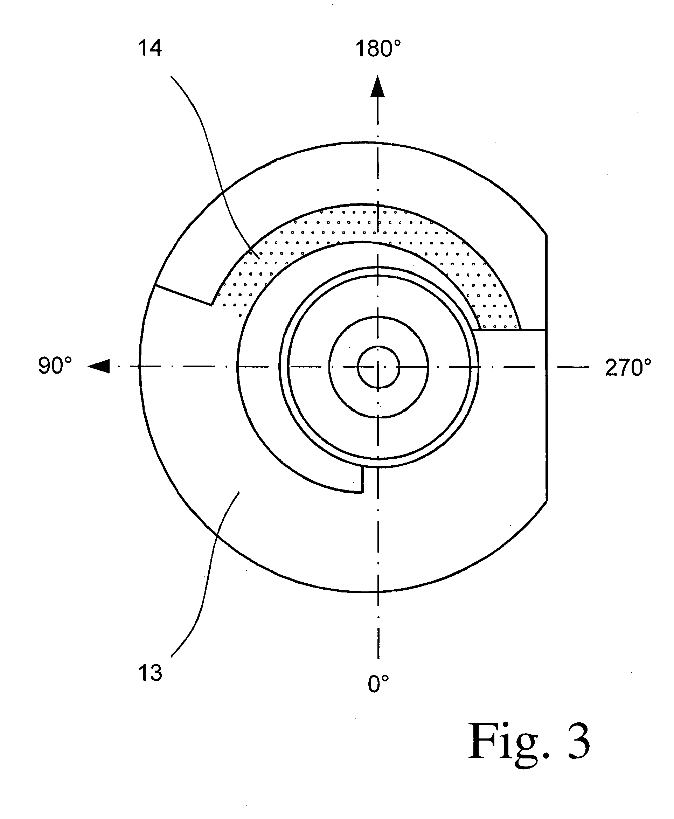

Erfindungsgemäß ist nun zunächst, wie das in Fig. 3 angedeutet ist, zwischen dem unteren Federende der Schraubendruckfeder 3 und dem unteren, mit dem Stoßdämpfer 4 verbundenen Federauflager 13 zumindest teilweise eine das untere Federende der Schraubendruckfeder 3 oder / und das untere, mit dem Stoßdämpfer 4 verbundene Federauflager 13 schützende Beschichtung 14 vorgesehen. Vorzugsweise ist aber diese Beschichtung 14, wofür auch die Fig. 3 spricht, nur an dem unteren, mit dem Stoßdämpfer 4 verbunden Federauflager 13 verwirklicht.

Vorzugsweise besteht die Beschichtung 14 aus Gummi oder aus Kunststoff. Besteht die Beschichtung 14 aus Gummi, so kann die Beschichtung 14 auf den mit dem unteren Federende der Schraubendruckfeder 3 in Berührung kommenden Bereich des unteren, mit dem Stoßdämpfer 4 verbundenen Federauflagers 13 aufvulkanisiert sein. Soll für die Beschichtung 14 Kunststoff verwendet werden, so kann diese Beschichtung 14 dadurch realisiert werden, daß die Beschichtung 14 auf den mit dem unteren Federende der Schraubendruckfeder 3 in Berührung kommenden Bereich des unteren, mit dem Stoßdämpfer 4 verbundenen Federauflagers 13 durch chemische Gasphasenabscheidung (CVD), durch physikalische Gasphasenabscheidung (PVD) oder durch Plasmaspritzen aufgebracht wird.

Es besteht auch die Möglichkeit, für die Beschichtung 14 Zink zu wählen oder eine Beschichtung 14 zu realisieren, die eine Zinkbeilage enthält. Dabei wirkt die Beschichtung 14 aus Zink oder die in der Beschichtung 14 enthaltene Zinkbeilage als Opferanode, wie das für sich im Stand der Technik zur Verhinderung von Korrosionen umfangreich bekannt ist.

Die der Erfindung zugrundeliegende Aufgabe, die bekannten Radaufhängungen dahingehend zu verbessern, daß die ungewollten, aber unvermeidbaren Relativbewegungen zwischen dem unteren Federende der Schraubendruckfeder 3 und dem unteren, mit dem Stoßdämpfer 4 verbundenen Federauflager 13 sich weniger negativ als im Stand der Technik auswirken, ist erfindungsgemäß mit anderen Worten dadurch gelöst, daß eine bestimmte ungewollte, aber unvermeidbare Relativbewegung zwischen dem unteren Federende der Schraubendruckfeder 3 und dem unteren, mit dem Stoßdämpfer 4 verbundenen Federauflager 13 hingenommen wird und die schädlichen Auswirkungen genau dieser Relativbewegung reduziert bzw. sogar völlig eliminiert werden, nämlich durch die erfindungsgemäß vorgesehene Beschichtung 14.

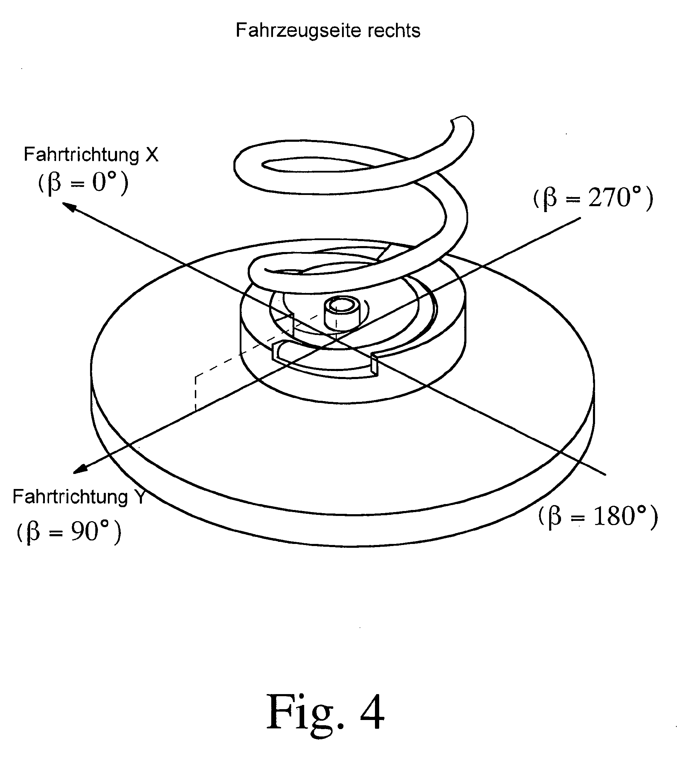

Wie weiter oben ausgeführt, ist eine besonders vorteilhafte Lehre der Erfindung dadurch gekennzeichnet, daß die Schraubendruckfeder 3 unter einem besonders ausgewählten Winkel auf das untere, mit dem Stoßdämpfer 4 verbundene Federauflager 13 ausgerichtet ist. Das zeigt die Fig. 4 in einer perspektivischen Darstellung, wobei in dem in dieser Figur dargestellten Ausführungsbeispiel dieser Winkel 90° beträgt; daraus ergibt sich, daß die Ebene der Anschlagsfläche bei 90° liegt.

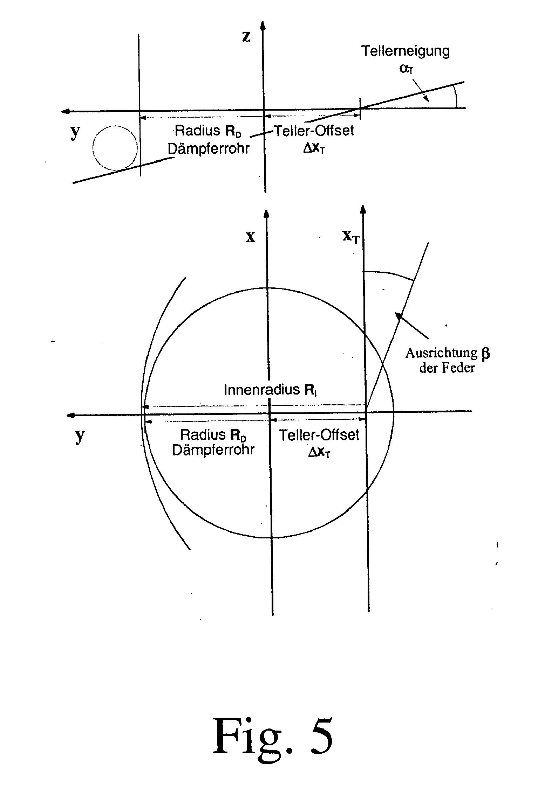

Weiter oben ist auch ausgeführt worden, daß zur Lehre der Erfindung gehört, im Bereich des unteren, mit dem Stoßdämpfer 4 verbundenen Federauflagers 13 der zur Querkraftkompensation gewollte Federtelleroffset teilweise durch die Geometrie des Federauflagers 13 und teilweise durch die Geometrie der Schraubendruckfeder 3 realisiert ist. Das ist in der Fig. 5 angedeutet; der obere Teil der Fig. 5 zeigt die Verhältnisse in der Y-Z-Ebene, der untere Teil der Fig. 5 die Verhältnisse in der X-Y-Ebene.

Der obere Teil der Fig. 5 zeigt auch schematisch, daß das untere, mit dem Stoßdämpfer 4 verbundene Federauflager 13 nicht exakt senkrecht zur Kolbenstange 8 des Stoßdämpfers angeordnet ist, vielmehr die Ebene des unteren, mit dem Stoßdämpfer 4 verbundenen Federauflagers 13 unter einem spitzen Winkel zur Kolbenstange 8 des Stoßdämpfers 4 verläuft; vorzugsweise ist also eine Federtellerneigung realisiert.

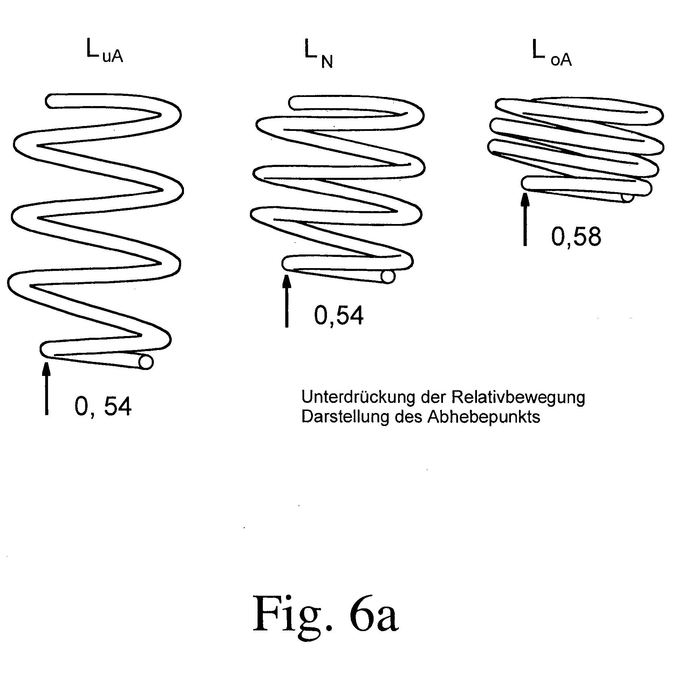

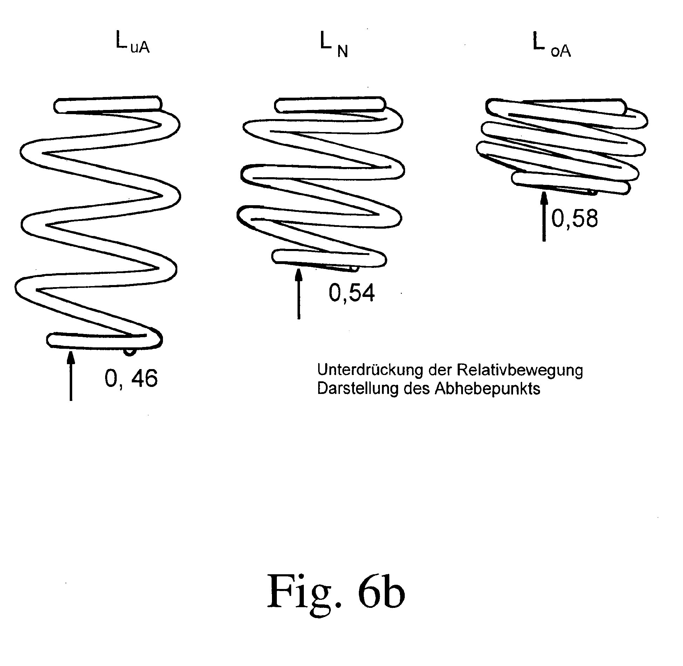

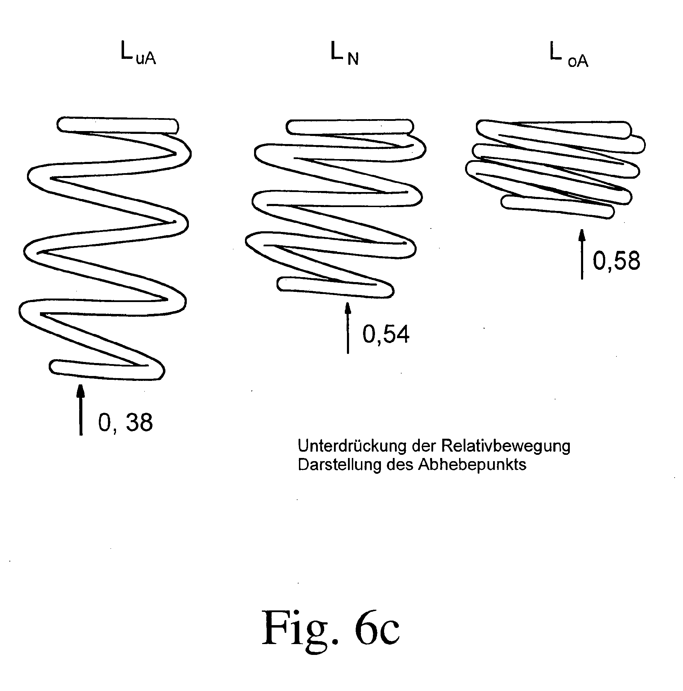

Schließlich ist in der Fig. 6 die jeweils erreichte Unterdrückung der Relativbewegung zwischen dem unteren Federende der Schraubendruckfeder 3 und dem unteren, nicht dargestellten Federauflager verdeutlicht und der jeweils erreichte Abhebepunkt dargestellt. Dabei sind die Verhältnisse dargestellt in der Fig. 6a für einen Winkel von 90°, in der Fig. 6b für einen Winkel von 135° und in der Fig. 6c für einen Winkel von 180°. In den Fig. 6a, 6b und 6c ist jeweils links der ausgefederte Zustand, in der Mitte der Zustand bei normaler Belastung und rechts der Zustand bei maximaler Einfederung.

## Patentansprüche

1. Radaufhängung mit einem einerseits mit der Karosserie (1) und andererseits mit dem Rad (2) verbundenen, eine Schraubendruckfeder (3) = (Tragfeder) und einen Stoßdämpfer (4) aufweisenden, radführenden Federbein (5) und mit einem Querlenker (6), wobei die Schraubendruckfeder (3) zwischen einem oberen, mit der Karosserie (1) verbundenen Federwiderlager (12) und einem unteren, mit dem Stoßdämpfer (4) verbundenen Federauflager (13) vorgesehen ist,
**dadurch gekennzeichnet,**
**daß** zwischen dem unteren Federende der Schraubendruckfeder (3) und dem unteren, mit dem Stoßdämpfer (4) verbundenen Federauflager (13) zumindest teilweise eine das untere Federende der Schraubendruckfeder (3) oder / und das untere, mit dem Stoßdämpfer (4) verbundene Federauflager (13) schützende Beschichtung (14) vorgesehen ist.

2. Radaufhängung nach Anspruch 1, **dadurch gekennzeichnet, daß** die Beschichtung (14) aus Gummi oder aus Kunststoff besteht.

3. Radaufhängung nach Anspruch 2, wobei die Beschichtung (14) aus Gummi besteht, **dadurch gekennzeichnet, daß** die Beschichtung (14) auf mit dem unteren Federende der Schraubendruckfeder (3) in Berührung kommende Bereiche des unteren, mit dem Stoßdämpfer (4) verbundenen Federauflagers (13) aufvulkanisiert ist.

4. Radaufhängung nach Anspruch 2, wobei die Beschichtung (14) aus Kunststoff besteht, **dadurch gekennzeichnet, daß** die Beschichtung (14) auf mit dem unteren Federende der Schraubendruckfeder (3) in Berührung kommende Bereiche des unteren, mit dem Stoßdämpfer (4) verbundenen Federauflagers (13) durch chemische Gasphasenabscheidung (CVD), durch physikalische Gasphasenabscheidung (PVT) oder durch Plasmaspritzen aufgebracht wird.

5. Radaufhängung nach einem der Ansprüche 1 bis 4, **dadurch gekennzeichnet, daß** die Beschichtung (14) aus Zink besteht oder eine Zinkbeilage enthält.

6. Radaufhängung mit einem einerseits mit der Karosserie (1) und andererseits mit dem Rad (2) verbundenen, eine Schraubendruckfeder (3) = (Tragfeder) und einen Stoßdämpfer (4) aufweisenden, radführenden Federbein (5) und mit einem Querlenker (6), wobei die Schraubendruckfeder (3) zwischen einem oberen, mit der Karosserie (1) verbundenen Federwiderlager (12) und einem unteren, mit dem Stoßdämpfer (4) verbundenen Federauflager (13) vorgesehen ist, insbesondere nach einem der Ansprüche 1 bis 5,
**dadurch gekennzeichnet,**
**daß** im Bereich des unteren, mit dem Stoßdämpfer (4) verbundenen Federauflagers (13) der zur Querkraftkompensation gewollte Federtelleroffset teilweise durch die Geometrie des Federauflagers (13) und teilweise durch die Geometrie der Schraubendruckfeder (3) realisiert ist.

7. Radaufhängung nach Anspruch 6, **dadurch gekennzeichnet, daß** der Federtelleroffset zu etwa 35 % bis 50 %, insbesondere zu etwa 40 % bis 45 %, durch die Geometrie des Federauflagers (13) und zu etwa 50 % bis 65 %, insbesondere zu etwa 55 % bis 60 %, durch die Geometrie der Schraubendruckfeder (3) realisiert ist.

8. Radaufhängung mit einem einerseits mit der Karosserie (1) und andererseits mit dem Rad (2) verbundenen, eine Schraubendruckfeder (3) = (Tragfeder) und einen Stoßdämpfer (4) aufweisenden, radführenden Federbein (5) und mit einem Querlenker (6), wobei die Schraubendruckfeder (3) zwischen einem oberen, mit der Karosserie (1) verbundenen Federwiderlager (12) und einem unteren, mit dem Stoßdämpfer (4) verbundenen Federauflager (13) vorgesehen ist, insbesondere nach einem der Patentansprüche 1 bis 7,
**dadurch gekennzeichnet,**
**daß** das untere, mit dem Stoßdämpfer (4) verbundene Federauflager (13) nicht exakt senkrecht zur Kolbenstange (8) des Stoßdämpfers (4) angeordnet ist, vielmehr die Ebene des unteren, mit dem Stoßdämpfer (4) verbundenen Federauflagers (13) unter einem spitzen Winkel zur Kolbenstange (8) des Stoßdämpfers (4), vorzugsweise unter einem Winkel von etwa 84° bis 88°, insbesondere unter einem Winkel von etwa 86° verläuft.

9. Radaufhängung nach einem der Ansprüche 1 bis 8, **dadurch gekennzeichnet, daß** die Schraubendruckfeder (3) unter einem Winkel auf das untere, mit dem Stoßdämpfer (4) verbundene Federauflager (13) ausgerichtet ist, der gleich oder größer 90°, aber kleiner 180° ist, vorzugsweise auch im Bereich von etwa 135° liegen kann.
